# EUROPÄISCHE PATENTSCHRIFT

(11) **EP 1 772 645 B1**
(45) Veröffentlichungstag und Bekanntmachung des Hinweises auf die Patenterteilung: **01.07.2009**
(21) Anmeldenummer: 06019118.6
(22) Anmeldetag: 13.09.2006
(51) Int. Cl.: F16D 48/04

(54) **Kupplungsvorrichtung eines Kraftfahrzeugs**
Clutch device for a vehicle
Dispositif d'embrayage pour un véhicule automobile

(30) Priorität: 06.10.2005 DE 102005047930
(43) Veröffentlichungstag der Anmeldung: 11.04.2007
(73) Patentinhaber: ZF Friedrichshafen AG, 88038 Friedrichshafen (DE)
(72) Erfinder: Bader, Josef, 88045 Friedrichshafen (DE); Renner, Stefan, 78351 Bodman-Ludwigshafen (DE)

(56) Entgegenhaltungen:
- AT-B- 305 788
- DE-A1- 3 011 777
- DE-A1- 19 716 600
- SU-A1- 1 594 000
- US-A- 3 908 514

## Beschreibung

Die Erfindung betrifft eine kombination aus Kupplungsvorrichtung und Schaltgetriebe eines Kraftfahrzeugs, mit einer im Kraftfluss zwischen einem Antriebsmotor und dem Schaltgetriebe angeordneten Kupplung und einer zugeordneten servounterstützten Betätigungsvorrichtung, wobei die Kupplung als eine mittels einer Anpressfeder passiv schließbare und über ein Ausrücklager aus- und einrückbare trockene Reibungskupplung ausgebildet ist, und wobei die Betätigungsvorrichtung einen zwischen einem Kupplungspedal und dem Ausrücklager wirksamen Primärtrieb sowie einen pneumatisch wirksamen Servotrieb mit einem unmittelbar an dem Ausrücklager angeordneten Pneumatik-Stellzylinder und mit einem durch das Kupplungspedal steuerbaren Steuerungsventil umfasst.

Eine im Antriebsstrang eines Kraftfahrzeugs zwischen einem üblicherweise als Verbrennungsmotor ausgebildeten Antriebsmotor und einem Schaltgetriebe angeordnete Kupplung dient im Wesentlichen zur Übertragung eines Drehmomentes von dem Antriebsmotor auf das Schaltgetriebe; im Schubbetrieb auch in umgekehrter Richtung. Im Normalzustand, also bei unbetätigtem Kupplungspedal, ist die Kupplung durch die Wirkung der Anpressfeder vollständig geschlossen und überträgt das Drehmoment schlupffrei durch Haftreibung. Nur bei Anfahrvorgängen, Schaltvorgängen und Notbremsungen wird die Kupplung durch die Betätigung des Kupplungspedals von dem Fahrer geöffnet und damit der Kraftfluss zwischen dem Antriebsmotor und dem Schaltgetriebe vorübergehend unterbrochen.

Bei einem Anfahrvorgang wird die Kupplung bei eingelegtem Anfahrgang wieder kontinuierlich geschlossen, wodurch das Drehmoment des Antriebsmotors im Schlupfbetrieb durch Gleitreibung übertragen wird, und dadurch ein Drehzahlausgleich zwischen der Abtriebswelle des schnell drehenden Antriebsmotors sowie der zunächst stillstehenden und nachfolgend zunächst langsamer drehenden Eingangswelle des Schaltgetriebes erfolgt.

Bei einem Schaltvorgang zwischen einem eingelegten Lastgang und einem einzulegenden Zielgang wird durch das Öffnen der Kupplung das lastfreie Auslegen des Lastgangs und nachfolgend das lastfreie Synchronisieren und Einlegen des Zielgangs ermöglicht. Bei einer Notbremsung wird durch das Öffnen der Kupplung die Antriebskraft des Antriebsmotors von den Antriebsrädern genommen.

Bei den meisten Kraftfahrzeugen erfolgt das Öffnen der Kupplung über ein unmittelbar mit dem Ausrücklager in Eingriff oder zumindest in Kontakt stehendes Ausrückelement, wie einem radial in der Kupplungsglocke angeordneten und mit dem Ausrücklager in Eingriff stehenden, am inneren Ende schwenkbeweglich gelagerten sowie am gegenüberliegenden äußeren Ende mit einem externen Anlenkpunkt versehenen Ausrückhebel, oder mittels einer tangential in der Kupplungsglocke angeordneten, drehbar gelagerten, innen mit einer mit dem Ausrücklager in Eingriff stehenden Ausrückgabel und außen mit einem externen Ausrückhebel versehenen Ausrückwelle.

Die weitere Übertragungsvorrichtung zwischen dem Ausrückelement und dem Kupplungspedal ist häufig rein mechanisch, wie z.B. durch einen Seilzug bzw. ein Gestänge realisiert, oder als hydraulische Übertragungsvorrichtung ausgebildet, bestehend aus einem mit dem Kupplungspedal verbundenen Geberzylinder, einem mit dem Ausrückelement verbundenen Nehmerzylinder und einer die beiden Betätigungszylinder verbindenden Verbindungsleitung.

Eine derartige Kupplungsvorrichtung mit einer Einscheiben-Trockenkupplung, einer hydraulischen Übertragungsvorrichtung und einem Ausrückhebel als Ausrückelement ist beispielsweise aus der DE 41 09 125 A1 bekannt, wobei dort zusätzlich eine Druckbeaufschlagung eines mit dem Geberzylinder verbundenen Ausgleichsbehälters vorgesehen ist. Vorteilhaft an einer derartigen Betätigungsvorrichtung ist die durch das wirksame Hebelverhältnis an dem Ausrückhebel erzielte günstige Kraft/Weg-Übersetzung. Nachteilig daran ist neben dem relativ großen Bauraumbedarf auch eine durch spielbehaftete Lager, Gelenke und Führungen bewirkte geringe Präzision der Kupplungsbetätigung.

Es ist daher, wie auch in der DE 41 09 125 A1 beschrieben ist, schon länger bekannt, bei einer hydraulischen Betätigungsvorrichtung anstelle eines Ausrückhebels und eines extern daran angreifenden Nehmerzylinders einen so genannten Zentralausrücker in Form eines innerhalb der Kupplungsglocke koaxial zu der Eingangswelle des Getriebes unmittelbar an dem Ausrücklager angeordneten Nehmerzylinders mit einem ringförmigen Zylinderkörper und einem darin axialbeweglichen Ringkolben zu verwenden. Hierdurch wird zwar eine präzisere Betätigung der Kupplung ermöglicht. Die günstige Kraft/Weg-Übersetzung einer Hebelanordnung entfällt dadurch jedoch, was bei der Kupplungsbetätigung nachteilig zu höheren Pedalkräften an dem Kupplungspedal führt. Ebenfalls handelt es sich bei dem ringförmigen Zentralausrücker um ein teures Spezialbauteil, durch dessen Anordnung zudem bei einer Leckage austretendes Hydraulikmittel auf die Reibflächen der Kupplung geraten und somit deren Funktion beeinträchtigen kann.

Um bei einer mit einem Zentralausrücker versehenen Kupplungsvorrichtung dennoch geringe Pedalkräfte zu erzielen, kann eine Kupplungs-Betätigungsvorrichtung bekanntlich mit einer Servounterstützung versehen werden. Hierzu ist es insbesondere für den Einsatz in schwereren Nutzfahrzeugen, die aufgrund entsprechender Zulassungsbestimmungen mit einer Druckluftanlage ausgerüstet sind, bekannt, parallel zu einem zwischen dem Kupplungspedal und dem Ausrücklager wirksamen Primärtrieb einen pneumatisch wirksamen Servotrieb mit einem unmittelbar an dem Ausrücklager angeordneten Pneumatikstellzylinder und einem durch das Kupplungspedal steuerbaren Steuerungsventil vorzusehen. Eine derartige Kupplungsvorrichtung ist in verschiedenen Ausführungen in der DE 197 16 600 A1 beschrieben.

Bei diesen bekannten Ausführungen der Kupplungsvorrichtung ist der Nehmerzylinder des hydraulischen Primärtriebs jeweils mit dem Stellzylinder des pneumatischen Servotriebs in einem gemeinsamen Zentralausrücker zusammengefasst. Dabei ist der hydraulische Stellzylinder des Primärtriebs jeweils radial innerhalb des pneumatischen Stellzylinders des Servotriebs angeordnet, und beide Stellzylinder stehen über ein gemeinsames Kolbenelement miteinander in Verbindung. Nachteilig an dieser bekannten Betätigungsvorrichtung ist allerdings, dass der Zentralausrücker kompliziert aufgebaut und somit relativ teuer herstellbar ist, und dass bei einer Leckage an dem hydraulischen Stellzylinder des Primärtriebs austretendes Hydraulikmittel ebenso wie bei einer einfachen, mit einem zentral angeordneten Nehmerzylinder versehenen hydraulischen Betätigungsvorrichtung die Funktion der Kupplung beeinträchtigen kann.

Vor diesem Hintergrund liegt der vorliegenden Erfindung die Aufgabe zugrunde, eine Kupplungsvorrichtung der eingangs genannten Art vorzuschlagen, deren Betätigungsvorrichtung bei einfachem und kostengünstigen Aufbau eine erhöhte Funktionssicherheit aufweist.

Die Erfindung betrifft demnach eine Kombination aus Kupplungsvorrichtung und Schaltgetriebe eines Kraftfahrzeugs nach dem Oberbegriff des unabhängiges Anspruchs 1 oder nach dem Oberbegriff des unabhängiges Anspruchs 4.

Das Dokument DE 197 16 600 wird als nächsliegender Stand der Technik gegenüber dem Gegenstand des Anspruchs 1 angesehen, und das Dokument DE 3011777 gegenüber dem Gegenstand des Anspruchs 4.

Eine erste bevorzugte Lösung der Aufgabe besteht gemäß den kennzeichnenden Merkmalen des Anspruchs 1 darin, dass der Pneumatik-Stellzylinder des Servotriebs als ein koaxial zu der Eingangswelle des Schaltgetriebes angeordneter Ringzylinder sowie der Primärtrieb als ein hydraulischer Stelltrieb mit einem pedalseitigen Geberzylinder und mindestens einem kupplungsseitigen Nehmerzylinder ausgebildet ist, und dass der Nehmerzylinder vollständig innerhalb des Druckraums des Pneumatik-Stellzylinders angeordnet ist, wobei der Zylinderkörper des Nehmerzylinders mit dem Zylinderkörper des Pneumatik-Stellzylinders und der Kolben des Nehmerzylinders mit dem Kolben des Pneumatik-Stellzylinders verbunden ist.

Durch die Integration des mindestens einen hydraulischen-Nehmerzylinders des Primärtriebs in den Druckraum des Pneumatik-Stellzylinders des Servotriebs wird einerseits Bauraum eingespart und andererseits die Betriebssicherheit erhöht, da bei einer auftretenden Leckage an dem Nehmerzylinder austretendes Hydraulikmittel nicht an die Reibflächen der Kupplung gelangen kann, sondern in dem Druckraum des Pneumatik-Stellzylinders zurückgehalten wird. Ebenfalls können bei dieser Anordnung die Bauteile des hydraulischen Nehmerzylinders und des Pneumatik-Stellzylinders geometrisch einfach gehalten und somit preisgünstig hergestellt werden.

Der Nehmerzylinder des Primärtriebs kann als ein Ringzylinder mit einem Ringkolben ausgebildet sein, der innerhalb des Pneumatik-Stellzylinders koaxial zu der Eingangswelle des Schaltgetriebes angeordnet ist. Hierdurch ergibt sich bei dem Nehmerzylinder neben einer einfachen Geometrie eine größtmögliche Wirkfläche des Kolbens und damit eine relativ große Kraft/Weg-Übersetzung des Primärtriebs.

Möglich ist aber auch die Verwendung mehrerer Nehmerzylinder für den Primärtrieb, die innerhalb des Pneumatik-Stellzylinders umfangsseitig gleichmäßig verteilt achsensymmetrisch zu der Eingangswelle des Schaltgetriebes angeordnet sind. Hierdurch ist die Verwendung von Standard-Stellzylindern möglich, die von einschlägigen Herstellern preiswert beziehbar sind und eine hohe Betriebssicherheit aufweisen.

Im Gegensatz dazu besteht eine zweite bevorzugte Lösung der Aufgabe in Verbindung mit den oben schon im Zusammenhang mit Anspruch 1 genannten Merkmalen des Oberbegriffs des Anspruchs 4 darin, dass der Pneumatik-Stellzylinder des Servotriebs als ein koaxial zu der Eingangswelle des Schaltgetriebes angeordneter Ringzylinder und der Primärtrieb als ein das Kupplungspedal mit dem Ausrücklager verbindender mechanischer Stelltrieb ausgebildet ist.

Das Steuerungsventil des Servotriebs ist als ein elektrisch steuerbares Magnet-Proportionalventil ausgebildet, dessen Steuerkolben über einen Steuermagneten und eine elektrische Steuerleitung mit einem elektronischen Steuergerät verbunden ist, das wiederum über eine elektrische Sensorleitung zumindest mit einem an dem Primärtrieb angeordneten Betätigungssensor in Verbindung steht.

Hierbei werden die zuvor verwendeten hydraulischen Komponenten des Primärtriebs eingespart und durch einen mechanischen Stelltrieb ersetzt. Dadurch kann der geometrische Aufbau des Pneumatik-Stellzylinders vereinfacht und die Herstellungskosten der gesamten Betätigungsvorrichtung gesenkt werden. Die Stellkraft zum Ausrücken der Kupplung wird in diesem Fall weitgehend durch den Servotrieb aufgebracht, wogegen der mechanische Stelltrieb des Primärtriebs im Wesentlichen zur steuerungstechnischen Kraft- und Wegrückführung von dem Ausrücklager beziehungsweise der Anpressfeder auf das Kupplungspedal dient.

Der Primärtrieb ist hierbei zweckmäßig als ein unmittelbar zwischen dem Kupplungspedal und dem Ausrücklager angeordneter Bowdenzug ausgebildet, da dieser bei hoher Zug- und Druckstabilität ohne weitere Befestigungs- und Lagerpunkte weitgehend flexibel innerhalb eines Kraftfahrzeugs angeordnet werden kann.

Als Betätigungssensor kommt bevorzugt ein Kraftsensor in Frage, der zum Beispiel durch mehrere auf einem beschränkt elastischen Abschnitt des mechanischen Stelltriebs aufgebrachte Dehnmessstreifen gebildet sein kann. Möglich ist jedoch auch die Verwendung eines Wegsensors, durch den die jeweilige Position des Kupplungspedals oder des mechanischen Stelltriebs ermittelt werden kann.

Zur Verdeutlichung der Erfindung sind der Beschreibung fünf Zeichnungsfiguren mit Ausführungsbeispielen beigefügt. In diesen zeigt
- Fig. 1: eine erste Ausführungsform der erfindungsgemäßen Kombination in einer schematischen Ansicht,
- Fig. 2: eine zweite Ausführungsform der erfindungsgemäßen Kombination in einer schematischen Ansicht,
- Fig. 3: eine nicht erfindungsgemäßen Kombination in einer schematischen Ansicht,
- Fig. 4: eine vierte Ausführungsform der erfindungsgemäßen Kombination in einer schematischen Ansicht, und
- Fig. 5: eine nicht erfindungsgemäßen Kombination in einer schematischen Ansicht.

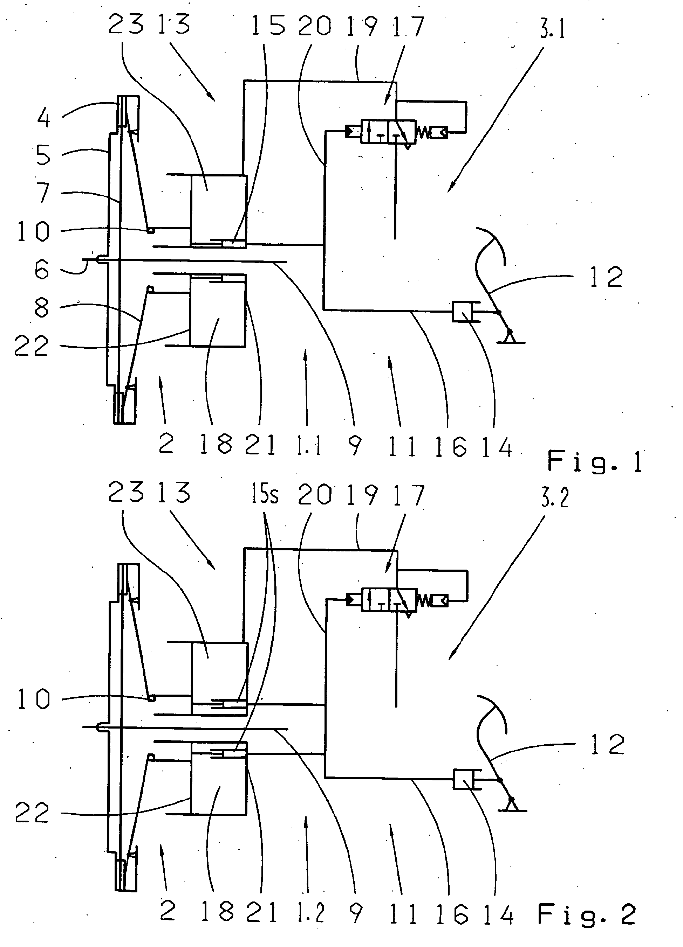

Eine Kupplungsvorrichtung 1.1 gemäß Fig. 1 weist eine Kupplung 2 und eine zugeordnete Betätigungsvorrichtung 3.1 auf. Die Kupplung 2 ist als eine Einscheiben-Trockenkupplung ausgebildet und umfasst in an sich bekannter Weise eine Druckplatte 4, die eingangsseitig über eine Schwungscheibe 5 mit der Kurbelwelle 6 eines nicht näher dargestellten Verbrennungsmotors in Verbindung steht, eine Mitnehmerscheibe 7, die im unbetätigten Zustand, belastet von einer an der Druckplatte 4 befestigten und als Membranfeder ausgebildeten Anpressfeder 8, zwischen der Druckplatte 4 und der Schwungscheibe 5 eingespannt ist und drehfest mit einer Eingangswelle 9 eines nicht näher dargestellten Schaltgetriebes in Verbindung steht. Die Kupplung 2 ist durch eine Axialverschiebung eines an der Anpressfeder 8 angeordneten Ausrücklagers 10 in Richtung des Verbrennungsmotors ausrückbar und durch eine anschließende Axialverschiebung in die Gegenrichtung wieder einrückbar.

Die Betätigungsvorrichtung 3.1 ist servounterstützt und weist daher neben einem Primärtrieb 11, durch den eine direkte Stellverbindung zwischen einem Kupplungspedal 12 und dem Ausrücklager 10 besteht, auch einen Servotrieb 13 auf, der einen über das Kupplungspedal 12 steuerbaren hilfskraftbetätigten Kupplungs-Stellantrieb darstellt. Der Primärtrieb 11 ist vorliegend hydraulisch wirksam ausgebildet und umfasst einen mit dem Kupplungspedal 12 verbundenen Geberzylinder 14, einen mit dem Ausrücklager 10 in Verbindung stehenden Nehmerzylinder 15 und eine die beiden Stellzylinder 14, 15 verbindende hydraulische Verbindungsleitung 16.

Der Servotrieb 13 ist pneumatisch wirksam ausgebildet und umfasst ein steuerungstechnisch mit dem Kupplungspedal 12 in Verbindung stehendes Steuerungsventil 17, einen mit dem Ausrücklager 10 verbundenen Pneumatik-Stellzylinder 18 und eine das Steuerungsventil 17 mit dem Pneumatik-Stellzylinder 18 verbindende pneumatische Verbindungsleitung 19. Das Steuerungsventil 17 ist vorliegend als ein 3/2-Wege-Proportionalventil mit Ausgangsdruckregelung ausgebildet, das eingangsseitig mit einer Druckluftquelle und einem Drucklostank sowie steuerseitig über eine hydraulische Steuerleitung 20 mit der Verbindungsleitung 16 des Primärtriebs 11 in Verbindung steht.

Der Pneumatik-Stellzylinder 18 des Servotriebs 13 ist als ein so genannter Zentralausrücker mit einem ringförmigen Zylinderkörper 21 und einem darin axialbeweglichen Ringkolben 22 ausgebildet und koaxial zu der Eingangswelle 9 des Schaltgetriebes unmittelbar an dem Ausrücklager 10 angeordnet. Der Nehmerzylinder 15 des Primärtriebs 11 ist vorliegend ebenfalls als Ringzylinder ausgebildet und innerhalb des Druckraums 23 des Pneumatik-Stellzylinders 18 koaxial zu der Eingangswelle 9 des Schaltgetriebes zwischen dem Zylinderkörper 21 und dem Ringkolben 22 angeordnet.

Durch den relativ direkten Kontakt des Kupplungspedals 12 mit dem Ausrücklager 10 über den hydraulischen Primärtrieb 11 ist die Kupplung 2 von einem Fahrer über das Kupplungspedal 12 besonders exakt und feinfühlig steuerbar. Aufgrund der relativ einfachen geometrischen Form des Pneumatik-Stellzylinders 18 und des hydraulischen Nehmerzylinders 15 sind diese Bauteile vergleichsweise preisgünstig herstellbar, wobei durch die Anordnung des Nehmerzylinders 15 innerhalb des Pneumatik-Stellzylinders 18 zusätzlich Bauraum eingespart und eine Beeinträchtigung der Kupplung 2 durch ein leckagebedingtes Austreten von Hydraulikmittel aus dem Nehmerzylinder 15 zuverlässig verhindert wird.

Bei einer Ausführungsvariante der Kupplungsvorrichtung 1.2 gemäß Fig. 2 ist bei sonst gleicher Ausbildung und Anordnung wie bei der Ausführung nach Fig.1 der Primärtrieb 11 mit mehreren hydraulischen Nehmerzylindern 15s versehen und diese innerhalb des Pneumatik-Stellzylinders 18 umfangsseitig gleichmäßig verteilt achsensymmetrisch zu der Eingangswelle 9 des Schaltgetriebes angeordnet. Hierdurch ist neben den schon zuvor genannten Vorteilen die Verwendung kostengünstiger und erprobter Standard-Stellzylinder als Nehmerzylinder 15s des Primärtriebs 11 möglich.

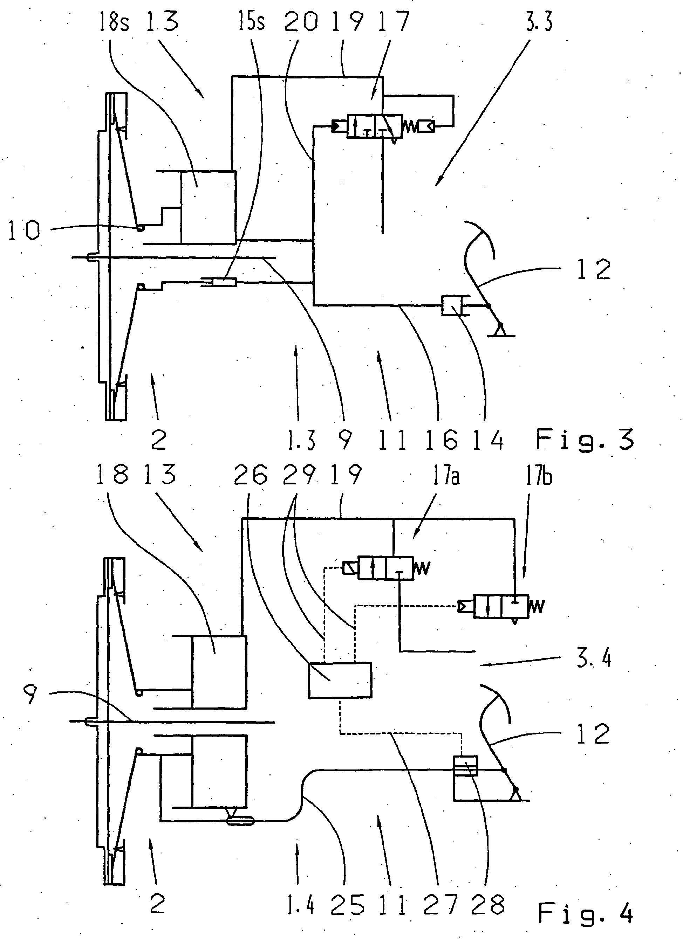

Bei sonst gleicher Ausbildung wie bei den beiden vorbeschriebenen Ausführungen weist bei der Kupplungsvorrichtung 1.3 nach Fig. 3 sowohl der Primärtrieb 11 mehrere hydraulische Nehmerzylinder 15s als auch der Servotrieb 13 mehrere Pneumatik-Stellzylinder 18s auf. Diese Stellzylinder 15s und 18s sind wechselweise und umfangsseitig gleichmäßig verteilt achsensymmetrisch zu der Eingangswelle 9 des Schaltgetriebes an dem Ausrücklager 10 angeordnet, wodurch eine gleichmäßige zentrale Krafteinleitung in das Ausrücklager 10 und in die Anpressfeder 8 gewährleistet ist. Außer für die Nehmerzylinder 15s des Primärtriebs 11 können nun auch für die Pneumatik-Stellzylinder 18s des Servotriebs 13 einfache und preisgünstige Standard-Stellzylinder verwendet werden.

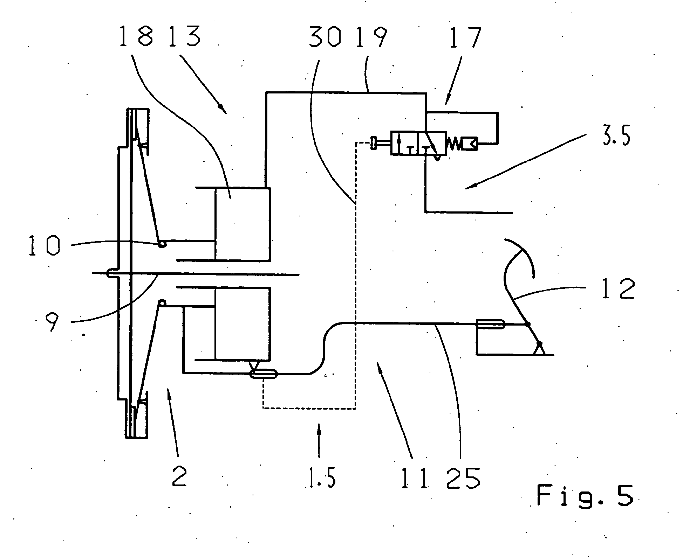

In Gegensatz zu den bisher beschriebenen Ausführungen ist der Primärtrieb 11 der Betätigungsvorrichtungen 3.4 und 3.5 bei den Kupplungsvorrichtungen 1.4 sowie 1.5 gemäß Fig. 4 und Fig.5 rein mechanisch ausgebildet und kann zum Beispiel in einem zwischen dem Kupplungspedal 12 und dem Ausrücklager 10 angeordneten Bowdenzug 25 bestehen. Der Pneumatik-Stellzylinder 18 des Servotriebs 13 ist in beiden Fällen wie in den Ausführungen nach Fig. 1 und Fig. 2 als ein Zentralausrücker mit einem ringförmigen Zylinderkörper 21 sowie einem darin axialbeweglichen Ringkolben 22 ausgebildet und koaxial zu der Eingangswelle 9 des Schaltgetriebes unmittelbar an dem Ausrücklager 10 angeordnet.

In der Ausführungsvariante gemäß Fig. 4 besteht die Steuerung des Servotriebs 13 aus einem elektronischen Steuergerät 26, das über eine elektrische Sensorleitung 27 mit einem an dem Kupplungspedal 12 angeordneten Betätigungssensor 28, bei dem es sich bevorzugt um einen Kraftsensor oder um einen Wegsensor handelt, und über elektrische Steuerleitungen 29 mit zwei vorliegend als 2/2-Wege-Magnet-Proportionalventile ausgebildete Steuerungsventile 17a, 17b verbunden ist. Das eine Steuerungsventil 17a steht eingangsseitig mit einer Druckluftquelle und das andere Steuerungsventil 17b mit einem Drucklostank in Verbindung.

In der Ausführungsform gemäß Fig. 5 ist das Steuerungsventil 17' des Servotriebs 13 wie in den Ausführungen nach Fig. 1 bis Fig. 3 als ein 3/2-Wege-Proportionalventil mit Ausgangsdruckregelung ausgebildet, das jedoch nunmehr mechanisch steuerbar ist, und dessen Steuerkolben über eine mechanische Verbindung 30 mit dem Primärtrieb 11 gekoppelt ist:

Durch die mechanische Ausbildung des Primärtriebs 11 ist die Betätigungseinrichtung 3.4 beziehungsweise 3.5 der jeweiligen Kupplungsvorrichtung 1.4 oder 1.5 im Vergleich zu den vorbeschriebenen hydraulischen Ausführungen weiter vereinfacht und damit kostengünstiger und betriebssicherer gestaltet.

### Bezugszeichen

- 1.1: Kupplungsvorrichtung
- 1.2: Kupplungsvorrichtung
- 1.3: Kupplungsvorrichtung
- 1.4: Kupplungsvorrichtung
- 1.5: Kupplungsvorrichtung
- 2: Kupplung
- 3.1: Betätigungsvorrichtung
- 3.2: Betätigungsvorrichtung
- 3.3: Betätigungsvorrichtung
- 3.4: Betätigungsvorrichtung
- 3.5: Betätigungsvorrichtung
- 4: Druckplatte
- 5: Schwungscheibe
- 6: Kurbelwelle
- 7: Mitnehmerscheibe
- 8: Anpressfeder
- 9: Eingangswelle
- 10: Ausrücklager
- 11: Primärtrieb
- 12: Kupplungspedal
- 13: Servotrieb
- 14: Geberzylinder
- 15: Nehmerzylinder
- 15s: Nehmerzylinder
- 16: hydraulische Verbindungsleitung

- 17: Steuerungsventil
- 17a: Steuerungsventil
- 17b: Steuerungsventil
- 17': Steuerungsventil
- 18: Pneumatik-Stellzylinder
- 18s: Pneumatik-Stellzylinder
- 19: Pneumatische Verbindungsleitung
- 20: hydraulische Steuerleitung
- 21: Zylinderkörper
- 22: Ringkolben
- 23: Druckraum
- 24: Nehmerzylinder
- 25: Bowdenzug
- 26: Steuergerät
- 27: elektrische Sensorleitung
- 28: Betätigungssensor
- 29: elektrische Steuerleitung
- 30: mechanische Verbindung

## Patentansprüche

1. Kombination aus Kupplungsvorrichtung und Schaltgetriebe eines Kraftfahrzeugs, mit einer im Kraftfluss zwischen einem Antriebsmotor und dem Schaltgetriebe angeordneten Kupplung (2) und einer zugeordneten servounterstützten Betätigungsvorrichtung, wobei die Kupplung (2) als eine mittels einer Anpressfeder (8) passiv schließbare und über ein Ausrücklager (10) aus- und einrückbare trockene Reibungskupplung ausgebildet ist, und wobei die Betätigungsvorrichtung einen zwischen einem Kupplungspedal (12) und dem Ausrücklager (10) wirksamen Primärtrieb (11) und einen pneumatisch wirksamen Servotrieb (13) mit einem unmittelbar an dem Ausrücklager angeordneten Pneumatik-Stellzylinder (18) und mit einem durch das Kupplungspedal (12) steuerbaren Steuerungsventil (17) umfasst, **dadurch gekennzeichnet, dass** der Pneumatik-Stellzylinder (18) des Servotriebs (13) als ein koaxial zu der Eingangswelle (9) des Schaltgetriebes angeordneter Ringzylinder und der Primärtrieb (11) als ein hydraulischer Stelltrieb mit einem pedalseitigen Geberzylinder (14) und mindestens einem kupplungsseitigen Nehmerzylinder (15) ausgebildet ist, und dass der Nehmerzylinder (15) vollständig innerhalb des Druckraums (23) des Pneumatik-Stellzylinders (18) angeordnet ist, wobei der Zylinderkörper des Nehmerzylinders (15) mit dem Zylinderkörper (21) des Pneumatik-Stellzylin-ders (18) und der Kolben des Nehmerzylinders (15) mit dem Kolben (22) des Pneumatik-Stellzylinders (18) verbunden ist.

2. Kombination nach Anspruch 1, **dadurch gekennzeichnet, dass** der Nehmerzylinder (15) des Primärtriebs (11) als ein Ringzylinder mit einem Ringkolben ausgebildet und innerhalb des Pneumatik-Stellzylinders (18) koaxial zu der Eingangswelle (9) des Schaltgetriebes angeordnet ist.

3. Kombination nach Anspruch 1, **dadurch gekennzeichnet, dass** der Primärtrieb (11) mehrere Nehmerzylinder (15s) aufweist, und dass die Nehmerzylinder (15s) innerhalb des Pneumatik-Stellzylinders (18) umfangsseitig gleichmäßig verteilt achsensymmetrisch zu der Eingangswelle (9) des Schaltgetriebes angeordnet sind.

4. Kombination aus kupplungsvorrichtung und Schaltgetriebe eines Kraftfahrzeugs, mit einer im Kraftfluss zwischen einem Antriebsmotor und dem Schaltgetriebe angeordneten Kupplung (2) und einer zugeordneten servounterstützten Betätigungsvorrichtung, wobei die Kupplung (2) als eine mittels einer Anpressfeder (8) passiv schließbare und über ein Ausrücklager (10) aus- und einrückbare trockene Reibungskupplung ausgebildet ist, wobei die Betätigungsvorrichtung einen zwischen einem Kupplungspedal (12) und dem Ausrücklager (10) wirksamen Primärtrieb (11) und einen pneumatisch wirksamen Servotrieb (13) mit einem unmittelbar an dem Ausrücklager angeordneten Pneumatik-Stellzylinder (18) und mit einem durch das Kupplungspedal (12) steuerbaren Steuerungsventil (17) umfasst, und wobei der Pneumatik-Stellzylin-der (18) des Servotriebs (13) als ein koaxial zu der Eingangswelle (9) des Schaltgetriebes angeordneter Ringzylinder und der Primärtrieb (11) als ein das Kupplungspedal (12) mit dem Ausrücklager (10) verbindender mechanischer Stelltrieb ausgebildet ist, wobei die Vorrichtung ein elektronisches Steuergerät und einen Betätigungssensor umfasst, **dadurch gekennzeichnet, dass** das Steuerungsventil (17a, 17b) des Servotriebs (13) als ein elektrisch steuerbares Magnet-Proportionalventil ausgebildet ist, dessen Steuerkolben über einen Steuermagneten und eine elektrische Steuerleitung (29) mit dem elektronischen Steuergerät (26) verbunden ist, und dass das Steuergerät (26) über eine elektrische Sensorleitung (27) zumindest mit dem an dem Primärtrieb (11) angeordneten Betätigungssensor (28) in Verbindung steht.

5. Kombination nach Anspruch 4, **dadurch gekennzeichnet, dass** der Primärtrieb (11) als ein unmittelbar zwischen dem Kupplungspedal (12) und dem Ausrücklager (10) angeordneter Bowdenzug (25) ausgebildet ist.

6. Kombination nach Anspruch 4, **dadurch gekennzeichnet, dass** der Betätigungssensor (28) als ein Kraftsensor oder als ein Wegsensor ausgebildet ist.

## Claims

1. Combination comprising a clutch apparatus and a change-speed gearbox of a motor vehicle, having a clutch (2) which is arranged in the force flow between a drive engine and the change-speed gearbox, and having an associated servo-assisted actuating apparatus, the clutch (2) being configured as a dry friction clutch which can be closed passively by means of a pressure spring (8) and can be engaged and disengaged via a disengagement bearing (10), and the actuating apparatus comprising a primary drive (11), which acts between a clutch pedal (12) and the disengagement bearing (10), and a pneumatically acting servo drive (13) having a pneumatic actuating cylinder (18) which is arranged directly on the disengagement bearing and having a control valve (17) which can be controlled by the clutch pedal (12), **characterized in that** the pneumatic actuating cylinder (18) of the servo drive (13) is configured as a ring cylinder which is arranged coaxially with respect to the input shaft (9) of the change-speed gearbox, and the primary drive (11) is configured as a hydraulic actuating drive with a pedal-side master cylinder (14) and at least one clutch-side slave cylinder (15), and **in that** the slave cylinder (15) is arranged completely within the pressure space (23) of the pneumatic actuating cylinder (18), the cylinder body of the slave cylinder (15) being connected to the cylinder body (21) of the pneumatic actuating cylinder (18) and the piston of the slave cylinder (15) being connected to the piston (22) of the pneumatic actuating cylinder (18).

2. Combination according to Claim 1, **characterized in that** the slave cylinder (15) of the primary drive (11) is configured as a ring cylinder with an annular piston and is arranged within the pneumatic actuating cylinder (18) coaxially with respect to the input shaft (9) of the change-speed gearbox.

3. Combination according to Claim 1, **characterized in that** the primary drive (11) has a plurality of slave cylinders (15s), and **in that** the slave cylinders (15s) are arranged within the pneumatic actuating cylinder (18) in a manner which is distributed uniformly on the circumferential side and is axially symmetrical with respect to the input shaft (9) of the change-speed gearbox.

4. Combination comprising a clutch apparatus and a change-speed gearbox of a motor vehicle, having a clutch (2) which is arranged in the force flow between a drive engine and the change-speed gearbox, and having an associated servo-assisted actuating apparatus, the clutch (2) being configured as a dry friction clutch which can be closed passively by means of a pressure spring (8) and can be engaged and disengaged via a disengagement bearing (10), the actuating apparatus comprising a primary drive (11), which acts between a clutch pedal (12) and the disengagement bearing (10), and a pneumatically acting servo drive (13) having a pneumatic actuating cylinder which is arranged directly on the disengagement bearing and having a control valve (17) which can be controlled by the clutch pedal (12), and the pneumatic actuating cylinder (18) of the servo drive (13) being configured as a ring cylinder which is arranged coaxially with respect to the input shaft (9) of the change-speed gearbox, and the primary drive (11) being configured as a mechanical actuating drive which connects the clutch pedal (12) to the disengagement bearing (10), the apparatus comprising an electronic control unit and an actuating sensor, **characterized in that** the control valve (17a, 17b) of the servo drive (13) is configured as an electronically controllable proportional solenoid valve, the control plunger of which is connected to the electronic control unit (26) via a control magnet and an electrical control line (29), and **in that** the control unit (26) is connected via an electrical sensor line (27) at least to the actuating sensor (28) which is arranged on the primary drive (11).

5. Combination according to Claim 4, **characterized in that** the primary drive (11) is configured as a Bowden cable (25) which is arranged directly between the clutch pedal (12) and the disengagement bearing (10).

6. Combination according to Claim 4, **characterized in that** the actuating sensor (28) is configured as a force sensor or as a displacement sensor.

## Revendications

1. Combinaison d'un dispositif d'embrayage et une boîte de vitesses d'un véhicule automobile, comprenant un embrayage (2) disposé dans le flux de forces entre un moteur d'entraînement et la boîte de vitesses, et un dispositif d'actionnement associé à servocommande, l'embrayage (2) étant réalisé en tant qu'embrayage à friction sec pouvant être fermé passivement au moyen d'un ressort de pression (8) et débrayable et embrayable par le biais d'un palier de débrayage (10), et le dispositif d'actionnement comprenant un entraînement primaire (11) agissant entre une pédale d'embrayage (12) et le palier de débrayage (10) et un entraînement servocommandé (13) à effet pneumatique avec un cylindre de commande pneumatique (18) disposé directement sur le palier de débrayage et avec une soupape de commande (17) commandable par la pédale d'embrayage (12), **caractérisée en ce que** le cylindre de commande pneumatique (18) de l'entraînement servocommandé (13) est réalisé sous forme de cylindre annulaire disposé coaxialement à l'arbre d'entrée (9) de la boîte de vitesses, et l'entraînement primaire (11) est réalisé sous forme d'un entraînement de commande hydraulique avec un maître-cylindre (14) du côté de la pédale, et au moins un cylindre récepteur (15) du côté de l'embrayage, et **en ce que** le cylindre récepteur (15) est disposé complètement à l'intérieur de l'espace de pression (23) du cylindre de commande pneumatique (18), le corps cylindrique du cylindre récepteur (15) étant connecté au corps cylindrique (21) du cylindre de commande pneumatique (18) et le piston du cylindre récepteur (15) étant connecté au piston (22) du cylindre de commande pneumatique (18).

2. Combinaison selon la revendication 1, **caractérisée en ce que** le cylindre récepteur (15) de l'entraînement primaire (11) est réalisé sous forme de cylindre annulaire avec un piston annulaire et est disposé à l'intérieur du cylindre de commande pneumatique (18) coaxialement à l'arbre d'entrée (9) de la boîte de vitesses.

3. Combinaison selon la revendication 1, **caractérisée en ce que** l'entraînement primaire (11) présente plusieurs cylindres récepteurs (15s) et **en ce que** les cylindres récepteurs (15s) sont disposés à l'intérieur du cylindre de commande pneumatique (18) du côté périphérique de manière répartie uniformément et avec une symétrie axiale par rapport à l'arbre d'entrée (9) de la boîte de vitesses.

4. Combinaison d'un dispositif d'embrayage et une boîte de vitesses d'un véhicule automobile, comprenant un embrayage (2) disposé dans le flux de forces entre un moteur d'entraînement et la boîte de vitesses, et un dispositif d'actionnement associé à servocommande, l'embrayage (2) étant réalisé en tant qu'embrayage à friction sec pouvant être fermé passivement au moyen d'un ressort de pression (8) et débrayable et embrayable par le biais d'un palier de débrayage (10), et le dispositif d'actionnement comprenant un entraînement primaire (11) agissant entre une pédale d'embrayage (12) et le palier de débrayage (10) et un entraînement servocommandé (13) à effet pneumatique avec un cylindre de commande pneumatique (18) disposé directement sur le palier de débrayage et avec une soupape de commande (17) commandable par la pédale d'embrayage (12), le cylindre de commande pneumatique (18) de l'entraînement servocommandé (13) étant réalisé sous forme de cylindre annulaire disposé coaxialement à l'arbre d'entrée (9) de la boîte de vitesses et l'entraînement primaire (11) étant réalisé sous forme d'un entraînement de commande mécanique reliant la pédale d'embrayage (12) au palier de débrayage (10), le dispositif comprenant un appareil de commande électronique et un capteur d'actionnement, **caractérisée en ce que** la soupape de commande (17a, 17b) de l'entraînement servocommandé (13) est réalisée sous forme d'électrovanne proportionnelle à commande électrique, dont le piston de commande est connecté à l'appareil de commande électronique (26) par le biais d'un aimant de commande et d'une conduite de commande électrique (29), et **en ce que** l'appareil de commande (26) est en liaison par le biais d'une conduite de capteur électrique (27) au moins avec le capteur d'actionnement (28) disposé sur l'entraînement primaire (11).

5. Combinaison selon la revendication 4, **caractérisée en ce que** l'entraînement primaire (11) est réalisé sous forme de câble Bowden (25) disposé directement entre la pédale d'embrayage (12) et le palier de débrayage (10).

6. Combinaison selon la revendication 4, **caractérisée en ce que** le capteur d'actionnement (28) est réalisé sous la forme d'un capteur de force ou sous la forme d'un capteur de distance.
